# EUROPEAN PATENT APPLICATION

(11) **EP 4 759 630 A1**
(43) Date of publication of application: **17.06.2026**
(21) Application number: 25220595.0
(22) Date of filing: 03.12.2025
(51) Int. Cl.: B60N 2/42, B60N 2/68, B60N 2/01, B60N 2/64

(54) **VEHICLE LOWER PORTION STRUCTURE**

(30) Priority: 12.12.2024 JP 2024218206
(71) Applicant: Toyota Jidosha Kabushiki Kaisha, Toyota-shi, Aichi-ken 471-8571 (JP)
(72) Inventor: HIGASHIHARA, Katsunori, TOYOTA-SHI, AICHI-KEN, 471-8571 (JP)
(74) Representative: Cabinet Beau de Loménie

(57) **Abstract**

A vehicle lower portion structure includes: a seat cushion (12) that is provided in a cabin and that includes a sitting area in which an occupant sits; a seat base (16) that is provided on a vehicle lower side of the seat cushion (12), with at least part of the seat base (16) being disposed under the sitting area, and that supports the seat cushion (12) from below; and a reinforcement member (32) that is provided between the seat cushion (12) and the seat base, that is supported by an upper surface (16A) of a front portion of the seat base (16), and that extends along a vehicle width direction.

## Description

### BACKGROUND

### Technical Field

This disclosure relates to a vehicle lower portion structure.

### Related Art

Japanese Patent Application Laid-open (JP-A) No. 2014-073739 discloses a structure where a battery unit is disposed under a seat frame. Furthermore, the seat frame of JP-A No. 2014-073739 includes a front frame comprising a round steel pipe, side frames, and a center frame and is formed in the shape of a frame.

Structures are known which, by disposing a pipe or the like extending in the vehicle width direction under a sitting area in which the occupant sits as in the structure described in JP-A No. 2014-073739, inhibit submarining in which at the time of a frontal impact to a vehicle an occupant slides through a seatbelt and inertially moves in the vehicle forward direction. However, at the time of a frontal impact to a vehicle, an excessive load is input from the occupant sitting in the seat to the seat cushion, so if devices are disposed under the seat, the pipe or the like may interfere with these devices.

### SUMMARY

It is an object of this disclosure to obtain a vehicle lower portion structure that can inhibit the occurrence of submarining at the time of a frontal impact to the vehicle and at the same time protect devices disposed under a seat.

A vehicle lower portion structure of a first aspect includes: a seat cushion that is provided in a cabin and that includes a sitting area in which an occupant sits; a seat base that is provided on a vehicle lower side of the seat cushion, with at least part of the seat base being disposed under the sitting area, and that supports the seat cushion from below; and a reinforcement member that is provided between the seat cushion and the seat base, that is supported by an upper surface of a front portion of the seat base, and that extends along a vehicle width direction.

In the vehicle lower portion structure of the first aspect, the seat cushion is provided in the cabin, and the seat cushion includes the sitting area in which the occupant sits. Furthermore, the seat base that supports the seat cushion from below is provided on the vehicle lower side of the seat cushion, and at least part of the seat base is disposed under the sitting area of the seat cushion. Moreover, the reinforcement member is provided between the seat cushion and the seat base. Here, the reinforcement member is supported by the upper surface of the front portion of the seat base and extends along the vehicle width direction. Because of this, at the time of a frontal impact to the vehicle, inertial movement of the occupant in the vehicle forward direction can be inhibited by the reinforcement member. That is, the occurrence of submarining can be inhibited.

Furthermore, since the reinforcement member is supported by the upper surface of the seat base, at the time of a frontal impact the load input from the occupant via the seat cushion to the reinforcement member can be received by the upper surface of the seat base. Because of this, even when devices are disposed under the reinforcement member, the reinforcement member can be inhibited from interfering with the devices.

A vehicle lower portion structure of a second aspect is the first aspect, wherein the upper surface of the seat base is provided with an inclined portion that is inclined in a vehicle downward direction on progression from a vehicle front side toward a vehicle rear side.

In the vehicle lower portion structure of the second aspect, the upper surface of the seat base is provided with the inclined portion, so at the time of a front impact the buttocks of the occupant can be inhibited from inertially moving in the vehicle forward direction.

A vehicle lower portion structure of a third aspect is the second aspect, wherein the inclined portion is provided with a groove portion that extends along the vehicle width direction, and the reinforcement member is disposed at the groove portion.

In the vehicle lower portion structure of the third aspect, the reinforcement member is disposed in the groove portion provided in the inclined portion, so loads input from the reinforcement member can be received by the entire surface of the groove portion. Because of this, compared with a structure where the reinforcement member is disposed on a flat surface, the reinforcement member can be inhibited from interfering with devices.

A vehicle lower portion structure of a fourth aspect is the third aspect, wherein the reinforcement member is disposed so as to fit inside the groove portion.

In the vehicle lower portion structure of the fourth aspect, the reinforcement member is disposed so as to fit inside the groove portion, so the occupant does not experience a foreign body sensation when sitting on the seat cushion. Because of this, occupant comfort can be improved while inhibiting the occurrence of submarining.

A vehicle lower portion structure of a fifth aspect is the third aspect, wherein an upper portion of the reinforcement member projects upward beyond the groove portion.

In the vehicle lower portion structure of the fifth aspect, the upper portion of the reinforcement member projects upward beyond the groove portion, so compared with a structure where the entire reinforcement member is disposed inside the groove portion, the vehicle lower portion structure is highly effective at inhibiting the occurrence of submarining. Furthermore, compared with a structure where the upper portion to the lower portion of the reinforcement member projects upward beyond the groove portion, the occupant does not experience a foreign body sensation.

A vehicle lower portion structure of a sixth aspect is the fourth aspect or the fifth aspect, wherein the reinforcement member is positioned higher in the vehicle upward direction than the lowest portion of an upper surface of the sitting area.

In the vehicle lower portion structure of the sixth aspect, the reinforcement member is positioned higher in the vehicle upward direction than the lowest portion of the upper surface of the seat cushion, so at the time of a frontal impact the ischium of the occupant inertially moving in the vehicle forward direction can be effectively arrested by the reinforcement member.

A vehicle lower portion structure of a seventh aspect is any one of the first aspect to the fifth aspect, wherein the reinforcement member is a pipe formed in a cylindrical shape.

In the vehicle lower portion structure of the seventh aspect, the reinforcement member is a cylindrical pipe, so compared with a structure where the reinforcement member is a square tube for example, stress can be inhibited from concentrating in part of the reinforcement member.

A vehicle lower portion structure of an eighth aspect is any one of the first aspect to the fifth aspect, wherein the seat base includes side surfaces that extend in the vehicle downward direction from both vehicle width direction end portions of the upper surface of the seat base, and the reinforcement member extends from one of the side surfaces to the other of the side surfaces.

In the vehicle lower portion structure of the eighth aspect, the reinforcement member extends from one of the side surfaces to the other of the side surfaces, so the reinforcement member can be supported across the entire upper surface of the seat base from the one of the side surfaces to the other of the side surfaces. Furthermore, loads input from the reinforcement member to the seat base can be effectively transmitted via both side surfaces in the vehicle downward direction.

A vehicle lower portion structure of a ninth aspect is any one of the first aspect to the fifth aspect, wherein the seat base is made of metal and covers auxiliaries from the vehicle upper side.

In the vehicle lower portion structure of the ninth aspect, the auxiliaries are covered from the vehicle upper side by the seat base made of metal, so the reinforcement member can be inhibited from interfering with the auxiliaries.

A vehicle lower portion structure of a tenth aspect is any one of the first aspect to the fifth aspect, wherein the seat base is mounted to an upper surface of a battery case in which a battery is housed.

In the vehicle lower portion structure of the tenth aspect, the seat base is mounted to the upper surface of the battery case, so at the time of a frontal impact the load input from the occupant to the seat cushion can be transmitted to the high-strength battery case.

As described above, according to the vehicle lower portion structure pertaining to the disclosure, the occurrence of submarining at the time of a frontal impact to the vehicle can be inhibited and at the same time devices disposed under the seat can be protected.

### BRIEF DESCRIPTION OF THE DRAWINGS

An exemplary embodiment of the present disclosure will be described in detail based on the following figures, wherein:
FIG. 1 is a side sectional view showing main parts of a vehicle lower portion structure pertaining to the embodiment;
FIG. 2 is perspective view showing a seat base and a reinforcement member pertaining to the embodiment;
FIG. 3 is a side sectional view showing main parts of a vehicle lower portion structure pertaining to an example modification; and
FIG. 4 is a perspective view showing a seat base and a reinforcement member pertaining to the example modification.

### DETAILED DESCRIPTION

A vehicle lower portion structure pertaining to an embodiment will now be described with reference to the drawings.

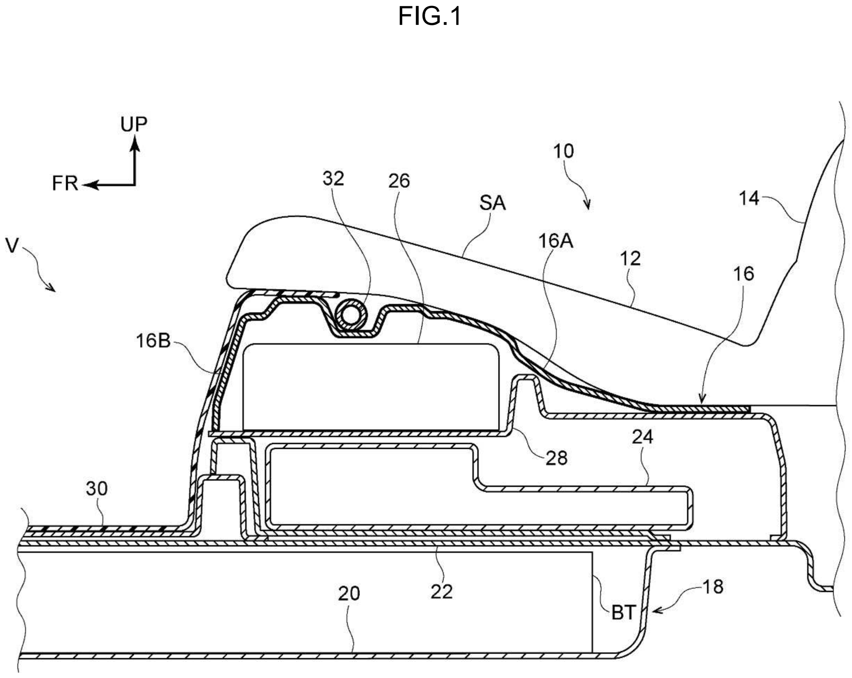

FIG. 1 is a side sectional view showing main parts of the vehicle lower portion structure pertaining to the embodiment. It will be noted that arrow FR, arrow UP, and arrow RH in the drawings indicate a vehicle forward direction, a vehicle upward direction, and a vehicle rightward direction of the vehicle, respectively. Unless otherwise noted, when the directions of front/rear, upper/lower, and left/right are used in the following description, these will refer to front/rear in the vehicle front and rear direction, upper/lower in the vehicle up and down direction, and left/right in the vehicle left and right direction (width direction), respectively.

As shown in FIG. 1, a cabin of a vehicle V to which the vehicle lower portion structure of this embodiment has been applied is provided with a rear seat 10 that configures a rear seat. The rear seat 10 is disposed rearward of a driver's seat and a passenger seat not shown in the drawings and is configured to include a seat cushion 12 and a seat back 14.

The seat cushion 12 extends in the vehicle width direction and the vehicle front and rear direction, and a seat cushion frame and a cushion pad not shown in the drawings are provided inside the seat cushion 12. The seat cushion 12 is configured to be capable of supporting the buttocks and thighs of an occupant from below and includes a sitting area SA serving as an area in which the occupant sits. It will be noted that "sitting area SA" refers to a wide range in which the seated occupant contacts the seat cushion 12 and is not limited to the part contacted by the buttocks of the occupant but is a concept that widely includes the range that the thighs of the occupant can contact.

The seat back 14 is tiltably connected to the rear end portion of the seat cushion 12 and extends in the vehicle up and down direction. Furthermore, a seat back frame and a cushion pad not shown in the drawings are provided inside the seat back 14, and the seat back 14 is configured to be capable of supporting the back of the occupant from the vehicle rear side. Moreover, the upper portion of the seat back 14 is provided with a headrest not shown in the drawings, and the headrest is configured to be capable of supporting the head of the occupant from the vehicle rear side. It will be noted that since FIG. 1 shows the rear seat 10 in a simplified manner, the seat cushion 12 and the seat back 14 are integrally illustrated, but the rear seat 10 may have a structure where the seat cushion 12 and the seat back 14 are separate and covered with covers or a structure where they are integrally covered with a cover.

A seat base 16 is provided on the vehicle lower side of the seat cushion 12. At least part of the seat base 16 is disposed under the sitting area SA. The seat base 16 will be described in detail further below.

In this embodiment, a battery case 18 is provided in the lower portion of the vehicle V. The battery case 18 is configured to include a case lower panel 20 disposed on the lower side and a case upper panel 22 disposed on the upper side, and a battery BT is disposed inside the battery case 18. The battery BT is configured to be able to store electrical power, and the electrical power stored in the battery BT is supplied to a motor serving as a drive source not shown in the drawings.

Devices are disposed above the rear portion of the battery case 18. In this embodiment, as an example, the devices are configured to include lower devices 24 disposed under a partition plate 28 and upper devices 26 disposed on the upper surface of the partition plate 28. It will be noted that a structure where the devices are disposed in one location above the battery case 18, without the partition plate 28 being provided, may also be employed It will be noted that the devices disposed as the lower devices 24 and the upper devices 26 are not particularly limited. For example, an inverter, a converter, an electronic control unit (ECU), and a junction box may be disposed as appropriate and electrically connected to each other.

The seat base 16 is made of metal substantially in the shape of a box that opens in the vehicle downward direction so as to cover all the lower devices 24 and the upper devices 26 from the vehicle upper side, and the seat base 16 supports the seat cushion 12 from the vehicle lower side. It will be noted that although in this embodiment the seat base 16 directly supports the seat cushion 12 as an example, the vehicle lower portion structure is not limited to this, and another member may be interposed between the seat cushion 12 and the seat base 16.

At the front portion of the seat base 16, a carpet 30 is sandwiched between the seat cushion 12 and the seat base 16, and the carpet 30 is superposed on the upper surface of the case upper panel 22 functioning as a floor panel. Here, a groove portion 16E is formed in an upper surface 16A of the seat base 16, and a reinforcement member 32 is disposed in the groove portion 16E.

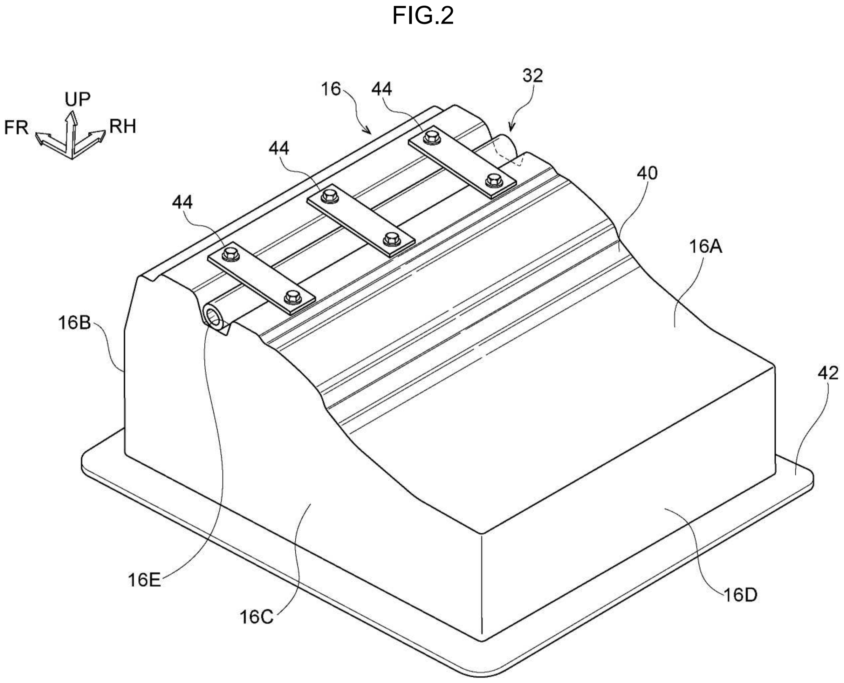

FIG. 2 is a perspective view showing the seat base 16 and the reinforcement member 32 pertaining to the embodiment. As shown in FIG. 2, the upper surface 16A of the seat base 16 is provided with an inclined portion 40 that is inclined in the vehicle downward direction heading from the vehicle front side to the vehicle rear side. In this embodiment, as an example, the entire upper surface 16A is inclined, so the inclined portion 40 ranges over the entire upper surface 16A of the seat base 16.

A front surface 16B of the seat base 16 extends downward from the front end of the upper surface 16A. Furthermore, side surfaces 16C of the seat base 16 extend in the vehicle downward direction from both vehicle width direction end portions of the upper surface 16A. Moreover, a rear surface 16D of the seat base 16 extends downward from the rear end of the upper surface 16A. The lower end of the front surface 16B, the lower ends of the side surfaces 16C, and the lower end of the rear surface 16D are provided with a flange portion 42, and the flange portion 42 is fastened to the upper surface of the battery case 18 by fasteners not shown in the drawings.

The groove portion 16E is formed in the inclined portion 40 in the upper surface 16A of the seat base 16 and extends in the vehicle width direction. Specifically, the groove portion 16E is formed continuously from one of the side surfaces 16C to the other of the side surfaces 16C and opens to both side surfaces 16C.

The reinforcement member 32 is a cylindrical pipe formed in a length that is about the same as the width direction length of the seat base 16. For this reason, the reinforcement member 32 extends in the vehicle width direction from one of the side surfaces 16C to the other of the side surfaces 16C. Although in this embodiment the reinforcement member 32 is made of metal as an example, the material of the reinforcement member 32 is not particularly limited.

The reinforcement member 32 of this embodiment is disposed so as to fit in the groove portion 16E of the seat base 16. For this reason, the diameter of the reinforcement member 32 is smaller than the depth of the groove portion 16E. It will be noted that the "depth of the groove portion 16E" here refers to a length from the highest position of the upper surface 16A of the seat base 16 to the bottom portion of the groove portion 16E. For this reason, although in FIG. 1 the upper surface 16A on the rear side of the groove portion 16E is in a lower position than the top portion of the reinforcement member 32, the upper surface 16A on the front side of the groove portion 16E is in a higher position than the top portion of the reinforcement member 32, so the reinforcement member 32 fits in the groove portion 16E.

As shown in FIG. 2, the reinforcement member 32 is supported by the upper surface 16A of the seat base 16 and is made incapable of coming out by three restraining members 44. The restraining members 44 are provided on both vehicle width direction end portions and the vehicle width direction center portion of the seat base 16 and are each made of a metal plate for example and formed in the shape of a substantially flat plate whose lengthwise direction coincides with the vehicle front and rear direction. Furthermore, both end portions of each of the restraining members 44 are fastened to the upper surface 16A of the seat base 16 across the groove portion 16E.

Here, as shown in FIG. 1, the reinforcement member 32 is disposed in the front portion of the seat base 16, so it is positioned higher in the vehicle upward direction than the lowest portion (rear end) of the upper surface of the sitting area SA of the seat cushion 12. For this reason, in a state in which the occupant is sitting on the seat cushion 12, the ischium of the occupant and the reinforcement member 32 are disposed in overlapping positions as viewed from the vehicle front and rear direction.

### (Action)

Next, the action of the vehicle lower portion structure pertaining to this embodiment will be described.

As shown in FIG. 1 and FIG. 2, in the vehicle lower portion structure pertaining to the embodiment, the seat cushion 12 is provided in the cabin, and the seat cushion 12 includes the sitting area SA in which the occupant sits. Furthermore, the seat base 16 that supports the seat cushion 12 from below is provided on the vehicle lower side of the seat cushion 12, and at least part of the seat base 16 is disposed under the sitting area SA of the seat cushion 12. Moreover, the reinforcement member 32 is provided between the seat cushion 12 and the seat base 16. Here, the reinforcement member 32 is supported by the upper surface 16A of the front portion of the seat base 16 and extends along the vehicle width direction. Because of this, at the time of a frontal impact to the vehicle V, inertial movement of the occupant in the vehicle forward direction can be inhibited by the reinforcement member 32. That is, the occurrence of submarining can be inhibited.

Furthermore, since the reinforcement member 32 is supported by the upper surface 16A of the seat base 16, at the time of a frontal impact the load input from the occupant via the seat cushion 12 to the reinforcement member 32 can be received by the upper surface 16A of the seat base 16. Because of this, even when devices (the lower devices 24 and the upper devices 26) are disposed under the reinforcement member 32, the reinforcement member 32 can be inhibited from interfering with the devices.

Moreover, in this embodiment, the reinforcement member 32 is positioned higher in the vehicle upward direction than the lowest portion of the upper surface of the sitting area SA of the seat cushion 12, so at the time of a frontal impact the ischium of the occupant inertially moving in the vehicle forward direction can be effectively arrested by the reinforcement member.

Moreover still, in this embodiment, the upper surface 16A of the seat base 16 is provided with the inclined portion 40, so compared with a configuration where the upper surface 16A is substantially horizontal, at the time of a frontal impact the buttocks of the occupant can be inhibited from inertially moving in the vehicle forward direction.

Furthermore, in this embodiment, the reinforcement member 32 is disposed in the groove portion 16E provide in the inclined portion 40, so loads input from the reinforcement member 32 can be received by the entire surface of the groove portion 16E. Because of this, compared with a structure where the reinforcement member 32 is disposed on a flat surface, the reinforcement member 32 can be inhibited from interfering with the devices.

Particularly in this embodiment, the reinforcement member 32 is disposed so as to fit inside the groove portion 16E, so the occupant does not experience a foreign body sensation when sitting on the seat cushion 12. Because of this, occupant comfort can be improved while inhibiting the occurrence of submarining.

Moreover, in this embodiment, the reinforcement member is a cylindrical pipe, so compared with a structure where the reinforcement member 32 is a square tube for example, stress can be inhibited from concentrating in part of the reinforcement member 32.

Moreover still, in this embodiment, the reinforcement member 32 extends from one of the side surfaces 16C to the other of the side surfaces 16C in the upper surface 16A of the seat base 16, and the groove portion 16E is formed in this entire area, so the reinforcement member 32 can be supported across the entire seat base 16 in the vehicle width direction. Furthermore, loads input from the reinforcement member 32 to the seat base 16 can be effectively transmitted via both side surfaces 16C in the vehicle downward direction.

Particularly in this embodiment, the seat base 16 is mounted to the upper surface of the battery case 18, so at the time of a frontal impact the load input from the occupant to the seat cushion can be transmitted to the high-strength battery case 18.

Furthermore, the lower devices 24 and the upper devices 26 are covered from the vehicle upper side by the seat base 16 made of metal, so the reinforcement member 32 can be inhibited from interfering with these auxiliaries.

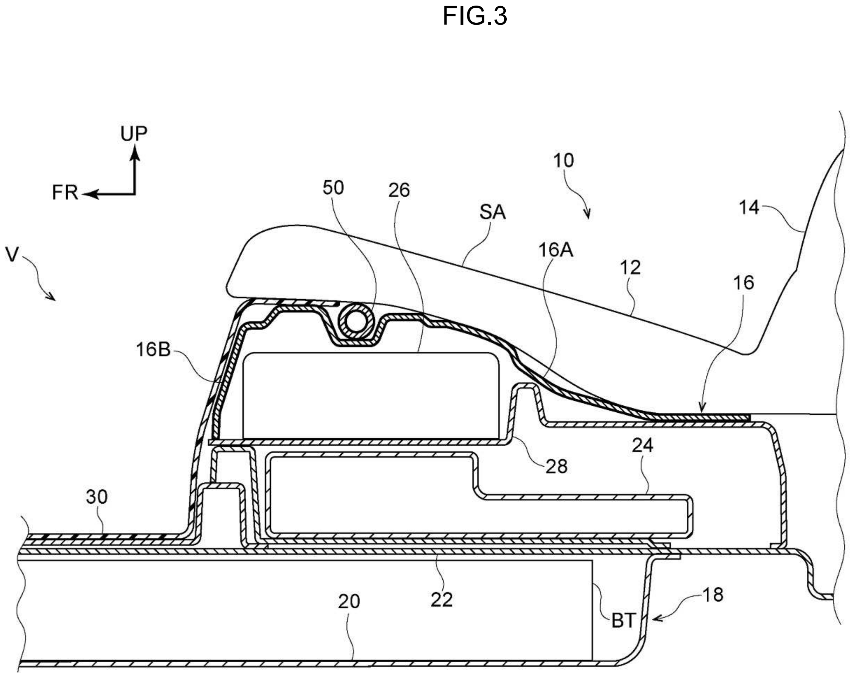

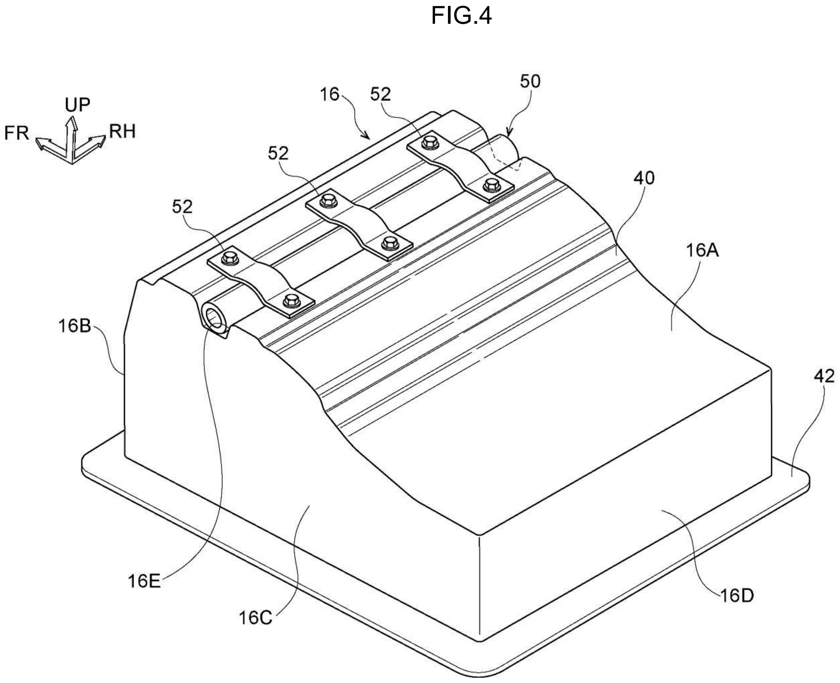

It will be noted that although in this embodiment the reinforcement member 32 is disposed so as to fit in the groove portion 16E as shown in FIG. 1, the vehicle lower portion structure is not limited to this. For example, the structure of the example modification shown in FIG. 3 and FIG. 4 may also be employed.

### (Example Modification)

FIG. 3 is a side sectional view showing main parts of a vehicle lower portion structure pertaining to an example modification. As shown in FIG. 3, this example modification has the same configuration as the embodiment excluding a reinforcement member 50.

The reinforcement member 50 in this example modification is a metal pipe with a larger diameter than that of the reinforcement member 32 pertaining to the embodiment, and the upper portion of the reinforcement member 50 projects upward beyond the groove portion 16E. Specifically, the diameter of the reinforcement member 50 is larger than the depth of the groove portion 16E. The "depth of the groove portion 16E" here refers to a length from the highest position of the upper surface 16A of the seat base 16 to the bottom portion of the groove portion 16E. That is, in FIG. 3, the upper surface 16A on the front side of the groove portion 16E is in a higher position than the upper surface 16A on the rear side of the groove portion 16E, and the top portion of the reinforcement member 50 is in a higher position than the upper surface 16A on the front side, so the upper portion of the reinforcement member 50 projects upward beyond the groove portion 16E.

FIG. 4 is a perspective view showing the seat base 16 and the reinforcement member 50 pertaining to the example modification. As shown in FIG. 4, in this example modification, the reinforcement member 50 is supported by the upper surface 16A of the seat base 16 and is made incapable of coming out by three restraining members 52. The restraining members 52 are provided on both vehicle width direction end portions and the vehicle width direction center portion of the seat base 16 and are each made of a metal plate for example and formed in the shape of a substantially flat plate whose lengthwise direction coincides with the vehicle front and rear direction. Furthermore, both end portions of each of the restraining members 52 are fastened to the upper surface 16A of the seat base 16 across the groove portion 16E.

In this example modification, the lengthwise direction center portions of the restraining members 52 bulge in the vehicle upward direction along the outer shape of the reinforcement members 50, and the reinforcement member 50 is sandwiched between and held by the restraining members 52 and the groove portion 16E.

According to the vehicle lower portion structure pertaining to this example modification, the upper portion of the reinforcement member 50 projects upward beyond the groove portion 16E, so compared with a structure where the entire reinforcement member 50 is disposed inside the groove portion 16E, the vehicle lower portion structure is highly effective at inhibiting the occurrence of submarining. Furthermore, compared with a structure where the upper portion to the lower portion of the reinforcement member 50 projects upward beyond the groove portion 16E, the occupant does not experience a foreign body sensation.

The vehicle lower portion structure pertaining to the disclosure and the example modification has been described above, but it can naturally be implemented in various ways without departing from the spirit of the disclosure. For example, although in the embodiment the lower devices 24 and the upper devices 26 are covered from the vehicle upper side by the seat base 16 as shown in FIG. 1, the vehicle lower portion structure is not limited to this. That is, a structure where the devices are not provided inside the seat base 16 may also be employed. In this case also, by using the seat base 16 to support the reinforcement member 32 in the sitting area SA, the reinforcement member 32 can be inhibited from interfering with other peripheral components.

Furthermore, although in the embodiment the groove portion 16E is formed in the upper surface 16A of the seat base 16 and the reinforcement member 32 is disposed in the groove portion 16E, the vehicle lower portion structure is not limited to this. For example, the reinforcement member 32 may also be secured to the upper surface 16A of a planar seat base 16 without the groove portion 16E being formed. In this case, by giving the reinforcement member a substantially rectangular shape in cross-section, a structure where the reinforcement member is planarly supported by the upper surface 16A of the seat base 16 can be obtained. Furthermore, in this case, the lower surface of the seat cushion may be recessed along the outer shape of the reinforcement member.

The following addenda are disclosed in relation to the above embodiment.

### (Addendum 1)

A vehicle lower portion structure comprising:
a seat cushion that is provided in a cabin and includes a sitting area in which an occupant sits;
a seat base that is provided on the vehicle lower side of the seat cushion, with at least part of the seat base being disposed under the sitting area, and supports the seat cushion from below; and
a reinforcement member that is provided between the seat cushion and the seat base, is supported by an upper surface of a front portion of the seat base, and extends along the vehicle width direction.

### (Addendum 2)

The vehicle lower portion structure of addendum 1, wherein the upper surface of the seat base is provided with an inclined portion that is inclined in the vehicle downward direction heading from the vehicle front side to the vehicle rear side.

### (Addendum 3)

The vehicle lower portion structure of addendum 2, wherein the inclined portion is provided with a groove portion that extends along the vehicle width direction, and the reinforcement member is disposed in the groove portion.

### (Addendum 4)

The vehicle lower portion structure of addendum 3, wherein the reinforcement member is disposed so as to fit inside the groove portion.

### (Addendum 5)

The vehicle lower portion structure of addendum 3, wherein the upper portion of the reinforcement member projects upward beyond the groove portion.

### (Addendum 6)

The vehicle lower portion structure of any one of addendum 1 to addendum 5, wherein the reinforcement member is positioned higher in the vehicle upward direction than the lowest portion of the upper surface of the sitting area.

### (Addendum 7)

The vehicle lower portion structure of any one of addendum 1 to addendum 6, wherein the reinforcement member is a pipe formed in a cylindrical shape.

### (Addendum 8)

The vehicle lower portion structure of any one of addendum 1 to addendum 7, wherein
the seat base includes side surfaces that extend in the vehicle downward direction from both vehicle width direction end portions of the upper surface of the seat base, and
the reinforcement member extends from one of the side surfaces to the other of the side surfaces.

### (Addendum 9)

The vehicle lower portion structure of any one of addendum 1 to addendum 8, wherein the seat base is made of metal and covers auxiliaries from the vehicle upper side.

### (Addendum 10)

The vehicle lower portion structure of any one of addendum 1 to addendum 9, wherein the seat base is mounted to an upper surface of a battery case in which a battery is housed.

## Claims

1. A vehicle lower portion structure comprising:
a seat cushion (12) configured to be provided in a cabin and that includes a sitting area (SA) for an occupant to sit on;
a seat base (16) that is provided on a vehicle lower side of the seat cushion (12), with at least part of the seat base (16) being disposed under the sitting area (SA), and that supports the seat cushion (12) from below; and
a reinforcement member (32,50) that is provided between the seat cushion (12) and the seat base, that is supported by an upper surface (16A) of a front portion of the seat base (16), and that extends along a vehicle width direction.

2. The vehicle lower portion structure of claim 1, wherein the upper surface (16A) of the seat base (16) is provided with an inclined portion (40) that is inclined in a vehicle downward direction on progression from a vehicle front side toward a vehicle rear side.

3. The vehicle lower portion structure of claim 2, wherein the inclined portion (40) is provided with a groove portion (16E) that extends along the vehicle width direction, and the reinforcement member (32,50) is disposed at the groove portion (16E).

4. The vehicle lower portion structure of claim 3, wherein the reinforcement member (32) is disposed so as to fit inside the groove portion (16E).

5. The vehicle lower portion structure of claim 3, wherein an upper portion of the reinforcement member (50) projects upward beyond the groove portion (16E).

6. The vehicle lower portion structure of claim 4 or 5, wherein the reinforcement member (32,50) is positioned higher in a vehicle upward direction than a lowest portion of an upper surface of the sitting area (SA).

7. The vehicle lower portion structure of any one of claims 1 to 5, wherein the reinforcement member (32,50) is a pipe formed in a cylindrical shape.

8. The vehicle lower portion structure of any one of claims 1 to 5, wherein:
the seat base (16) includes side surfaces (16C) that extend in a vehicle downward direction from both vehicle width direction end portions of the upper surface of the seat base (16), and
the reinforcement member (32) extends from one of the side surfaces (16C) to another of the side surfaces (16C).

9. The vehicle lower portion structure of any one of claims 1 to 5, wherein the seat base (16) is made of metal and is configured to cover auxiliaries from a vehicle upper side.

10. The vehicle lower portion structure of any one of claims 1 to 5, wherein the seat base (16) is configured to be mounted to an upper surface of a battery case (18) in which a battery (BT) is housed.
